# EUROPEAN PATENT SPECIFICATION

(11) **EP 3 957 897 B1**
(45) Date of publication and mention of the grant of the patent: **03.07.2024**
(21) Application number: 19925408.7
(22) Date of filing: 30.04.2019
(51) Int. Cl.: F17C 3/02

(54) **LIQUEFIED GAS TANK INCLUDING HOISTABLE INNER TUB**
FLÜSSIGGASTANK MIT HEBBARER INNERER WANNE
RÉSERVOIR DE GAZ LIQUÉFIÉ COMPRENANT UNE CUVE INTERNE POUVANT ÊTRE LEVÉE

(30) Priority: 16.04.2019 KR 20190044432
(43) Date of publication of application: 23.02.2022
(73) Proprietor: Korea Gas Corporation, Daegu 41062 (KR)
(72) Inventor: JUN, Jae-Ho, Daegu 41062 (KR); PARK, In-Hyo, Daegu 41062 (KR); CHOI, Bu-Il, Daegu 41062 (KR); KIM, Ki-Taek, Daegu 41062 (KR); LEE, Ho-Jun, Daegu 41062 (KR); SON, Gyu-Sik, Daegu 41062 (KR)
(74) Representative: Stöckeler, Ferdinand
(86) International application number: PCT/KR2019/005207
(87) International publication number: WO 2020/213781

(56) References cited:
- JP-A- H09 112 798
- JP-A- H09 112 798
- JP-A- 2010 144 864
- JP-B1- 6 430 077
- KR-A- 20170 113 770
- KR-B1- 101 846 428
- KR-B1- 101 885 173
- KR-B1- 101 897 255
- KR-B1- 101 897 255

## Description

### [Technical Field]

The present disclosure relates to a liquefied gas tank including a hoistable inner tub and a not claimed method for hoisting an inner tub in a liquefied gas tank, which may hoist an inner tub positioned in a liquefied gas tank for storing liquefied gas such as LNG and allow the inner tub to be inspected for defects. Such a tank is known from KR 101897255 B1.

### [Background Art]

Liquefied natural gas (hereinafter, referred to as 'LNG'), which is used as fuel, is stored in a liquefied state in a liquefied gas tank and supplied to demanders through typical pipes.

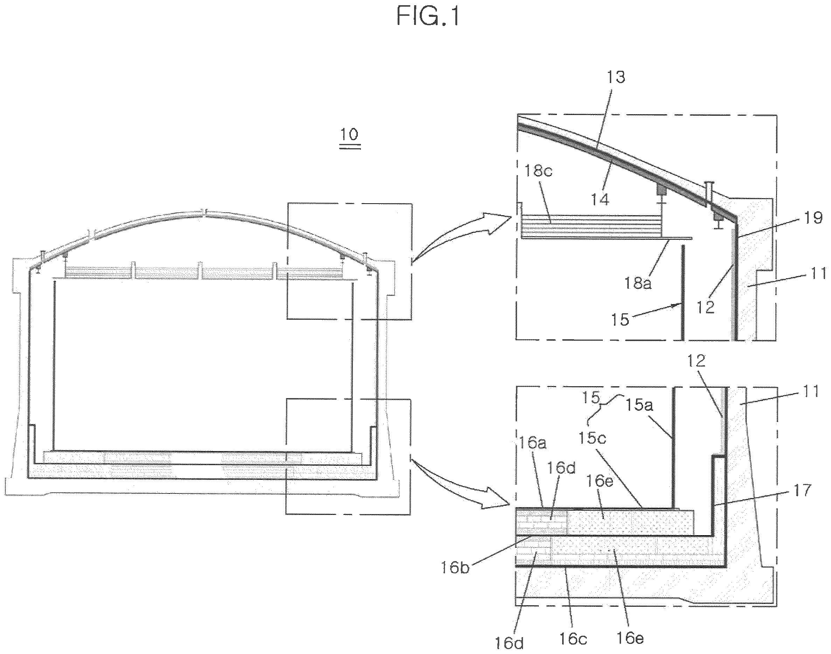

A liquefied gas tank 10 for storing LNG has a structure illustrated in FIG. 1. The liquefied gas tank 10 includes an outer wall 11 made of concrete, a wall body sealing plate 12 disposed in the outer wall 11 and configured to seal the LNG, a roof 13 configured to define an upper portion of the tank 10, a rafter 14 disposed in the roof 13 and configured to define a framework, an inner tub 15 disposed in the outer wall 11 and configured to accommodate the LNG, and a deck 18a configured to cover an upper side of the inner tub 15. Because the LNG is in a liquefied state at an ultralow temperature, a thermal insulator 18c is disposed on an upper portion of the deck 18a.

The inner tub 15 includes a side plate 15a configured to define a periphery of the inner tub 15, a reinforcing plate 15b disposed outside the side plate 15a and configured to reinforce the side plate 15a, and a bottom periphery plate 15c positioned on a peripheral portion of the bottom surface. Because the inner tub 15 is in direct contact with the LNG at an ultralow temperature, the inner tub 15 is made of a material (e.g., 9% nickel steel) excellent in low-temperature properties. To support a load of the LNG stored in the inner tub, the side plate 15a and the bottom periphery plate 15c may each be a thick plate (having a thickness of 25 mm, for example).

A bottom sealing plate 16a, which defines the bottom of the inner tub 15, is disposed on a portion of the inner tub 15 that excludes a periphery of the bottom of the inner tub 15, and the bottom sealing plate 16a has a periphery welded to the bottom periphery plate 15c. A rear sealing plate 16b and a bottom blocking plate 16c are disposed below the bottom sealing plate 16a. Glass blocks 16d and concrete blocks 16e are disposed between the bottom sealing plate 16a and the rear sealing plate 16b and between the rear sealing plate 16b and the bottom blocking plate 16c.

The glass block 16d is positioned on the middle portion, and the concrete block 16e is positioned at the periphery. The concrete block 16e is positioned approximately below the bottom periphery plate 15c, and the glass block 16d is positioned inside the concrete block 16e. The glass block 16d is made of a thermal insulator such as fiberglass for thermal insulating the LNG, and the concrete block 16e is made of concrete for supporting a load.

When the liquefied gas tank 10 having the above-mentioned structure reaches the durability limit after being initially installed and used, the liquefied gas tank 10 needs to be inspected for inner cracks and the like by nondestructive inspection.

To this end, in the related art, to check whether a part, which cannot be checked with the naked eye, e.g., a lower portion of the inner tub 15 has a crack, a method of cutting the inner tub 15, inspecting the inner tub 15, and then restoring the inner tub 15 by welding is used. However, in the case of this method, the outer wall 11 or the roof 13 needs to be partially cut to load or unload the cut inner tub 15, and the cut inner tub 15 needs to be restored by welding.

Accordingly, this method causes an increase in number of working processes, which causes an increase in working time and costs.

### [Disclosure]

### [Technical Problem]

The present disclosure has been made in an effort to solve the above-mentioned problems, and an object of the present disclosure is to provide a liquefied gas tank including hoistable an inner tub, and method for hoisting an inner tub in liquefied gas tank, which is including hoistable inner tub to inspect a liquefied gas tank without cutting the inner tub, thereby allowing a part, which is difficult to inspect with the naked eye, to be inspected.

### [Technical Solution]

To achieve the object, a liquefied gas tank including a hoistable inner tub according to claim 1 includes: an outer wall; an inner tub disposed inside the outer wall and configured to accommodate liquefied gas; and rafters disposed on a bottom surface of a roof and configured to define a framework, in which rafter lugs for supporting the inner tub at the time of hoisting the inner tub are installed for the respective rafters formed in a circumferential direction of the roof and disposed at intervals in a peripheral direction of the tank, in which stiffener lugs, which are connected to the rafter lugs with main ropes, are disposed at a periphery of a side plate of the inner tub and installed at intervals in a peripheral direction of the inner tub, and in which a hoisting means is installed on the rafter lug, the hoisting means and the stiffener lug are connected with the main rope, and then the hoisting means is manipulated to hoist the inner tub.

The rafter lug includes : a lug pad joined to the rafter; and a lug plate formed to be perpendicular to a bottom surface of the lug pad, and the lug plate may have one or more reinforcing rings that catch the hoisting means.

The lug plate is formed on the lug pad in a staggered manner at a predetermined angle with respect to the rafter formed in a radial direction of the tank.

A reinforcing plate for supporting the side plate is provided on the side plate and disposed along a periphery of the inner tub, and the stiffener lug may be fixed to the reinforcing plate.

The stiffener lug may have through-holes connected to the reinforcing rings of the rafter lug with the ropes.

The hoisting means may be installed on the first reinforcing ring of the rafter lug, the hoisting means and one of the through-holes formed in the stiffener lug may be connected with the main rope, a supporting means may be installed on the second reinforcing ring of the rafter lug, and the supporting means and the other through-hole formed in the stiffener lug may be connected with a sub rope.

The hoisting means may be a chain block, and the supporting means may be a turnbuckle.

The stiffener lug may be coupled, by bolting, to a stiffener pad positioned on a bottom surface of the reinforcing plate.

The liquefied gas tank may includes stiffener plates disposed at positions adjacent to a portion where the stiffener lug is installed, and the stiffener plate may have one surface joined to the side plate and the other surface joined to the reinforcing plate.

The stiffener plates are respectively disposed at two opposite sides of the stiffener lug, and the stiffener plates may be respectively installed on upper and lower portions of the reinforcing plate.

The liquefied gas tank may include carrying supports provided at intervals along the periphery of the side plate and configured to prevent the inner tub from swaying when the inner tub is hoisted.

The carrying support may include: a body fixed to the side plate; and a caster fixed to the body and configured to be in contact with an inner wall of the outer wall.

The caster of the carrying support may be installed to be positioned above a corner protection that protrudes toward the inner tub from a portion where the outer wall meets the bottom.

Support lugs are respectively installed on the side plate and the bottom periphery plate of the inner tub and disposed at intervals along a periphery of the inner tub, and the support lug installed on the side plate and the support lug installed on the bottom periphery plate may be connected with a wire.

The rafter may be fixed to the roof by an anchor.

Meanwhile, a method for hoisting an inner tub in a liquefied gas tank not according to the claimed invention, includes: a structure installing step of installing a structure, which is required to lift an inner tub, on a rafter for defining a framework at an upper side of the inner tub and a liquefied tank in the liquefied gas tank in which the inner tub is installed inside an outer wall and configured to accommodate liquefied gas; a hoisting preparing step of installing a hoisting means on the rafter and connecting the hoisting means and the inner tub with a main rope; and an inner tub hoisting step of hoisting the inner tub by manipulating the hoisting means by an operator.

The method may further include before the inner tub hoisting step, an inner tub separating step of separating a bottom periphery plate configured to define a bottom periphery of the inner tub from a bottom sealing plate positioned in the bottom periphery plate.

The structure installing step may include: a rafter lug installing step of installing a rafter lug on a bottom surface of the rafter; and a stiffener lug installing step of installing a stiffener lug on a periphery of a side plate of the inner tub, the stiffener lug being connected to the rafter lug with ropes.

In the stiffener lug installing step, stiffener plates may be disposed around the stiffener lug and provided at intervals from the stiffener lug, and the stiffener plate may have one surface joined to the side plate and the other surface joined to a reinforcing plate disposed along a periphery of the inner tub and configured to support the side plate.

In the hoisting preparing step, a supporting means may be installed on the rafter, and the supporting means may be connected to the inner tub with a sub rope.

The structure installing step may further include a carrying support installing step of installing a carrying support between a side plate of the inner tub and an inner surface of the outer wall to prevent the inner tub from swaying when the inner tub is hoisted.

The structure installing step may further include a wire installing step of installing support lugs on the side plate and a bottom periphery plate in a peripheral direction of the inner tub, fixing two opposite ends of a wire to the support lugs, and connecting the side plate and the bottom periphery plate to prevent the bottom periphery plate of the inner tub from sagging.

In the hoisting preparing step, the rafter may be fixed to the roof by an anchor.

The method may further include after the inner tub hoisting step, an inner tub supporting step of installing a safety support formed at a predetermined height on a bottom surface of the inner tub.

### [Advantageous Effects]

According to the liquefied gas tank including hoistable the inner tub and the method of hoisting the inner tub of the liquefied gas tank according to the present disclosure described above, the inner tub may be hoisted as it is, which makes it easy to inspect the part, such as the bottom surface of the inner tub or the glass block disposed below the bottom surface of the inner tub, which is difficult to identify with the naked eye.

In addition, since the inner tub is not cut at the time of inspecting the inner tub, a process of bonding the inner tub again is not required, and the outer wall need not be cut. Therefore, it is possible to reduce the time and cost required for the inspection.

### [Description of Drawings]

FIG. 1 is a cross-sectional view illustrating an interior of a typical liquefied gas tank.

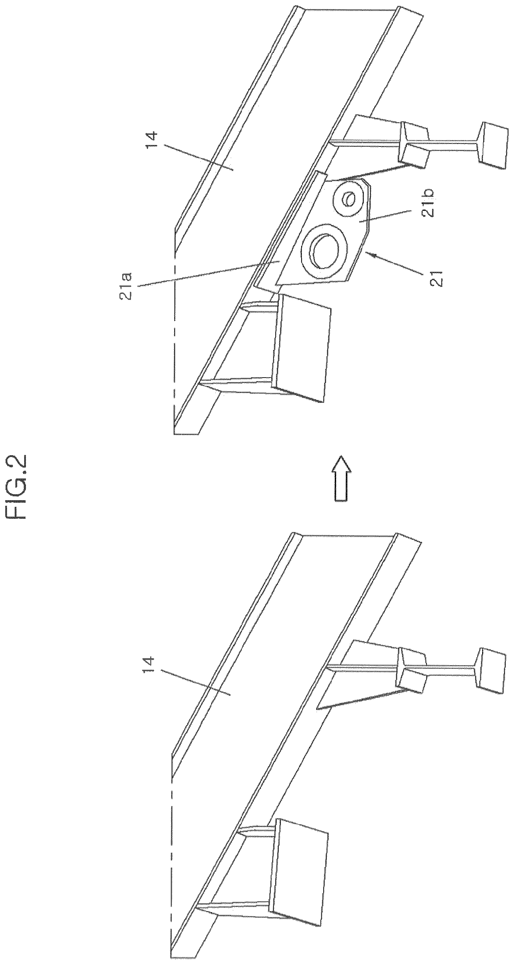

FIG. 2 is a perspective view illustrating states before and after a rafter lug is installed on a rafter in a liquefied gas tank including hoistable an inner tubaccording to the present disclosure.

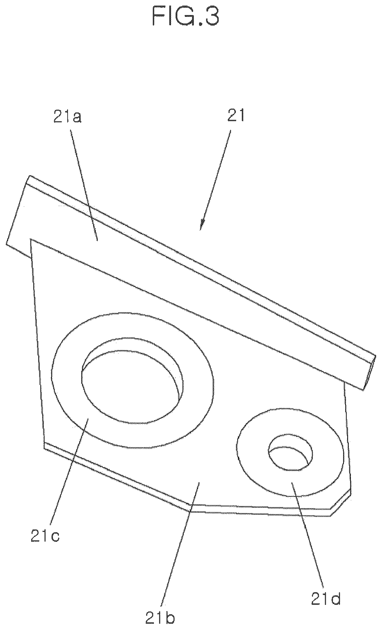

FIG. 3 is a perspective view of the rafter lug applied to the liquefied gas tank including hoistable the inner tub according to the present disclosure.

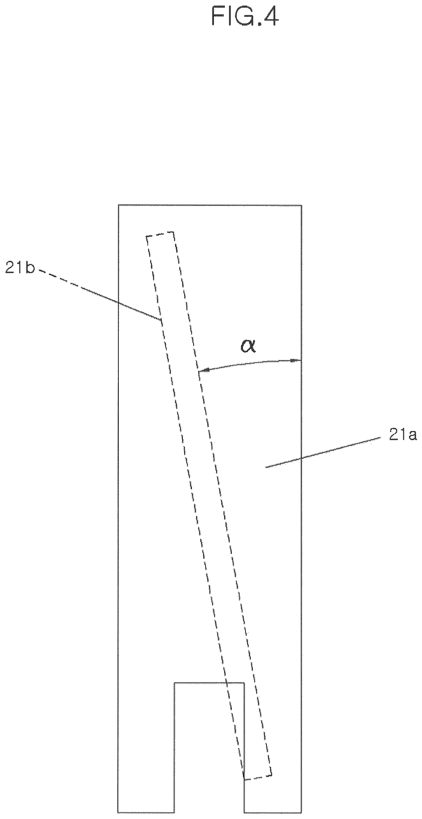

FIG. 4 is a top plan view of the rafter lug applied to the liquefied gas tank including hoistable the inner tub according to the present disclosure.

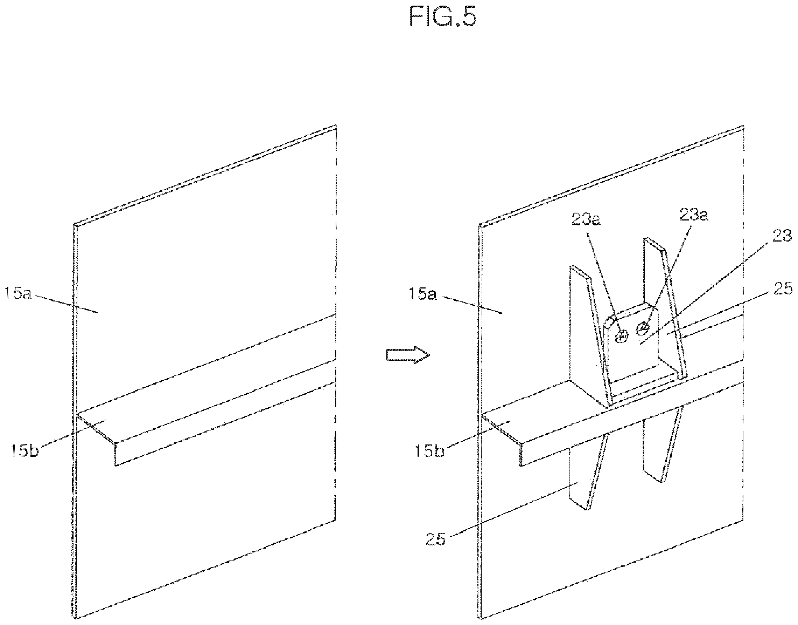

FIG. 5 is a perspective view illustrating states before and after a stiffener lug and a stiffener plate applied to the liquefied gas tank including hoistable the inner tub according to the present disclosure are installed.

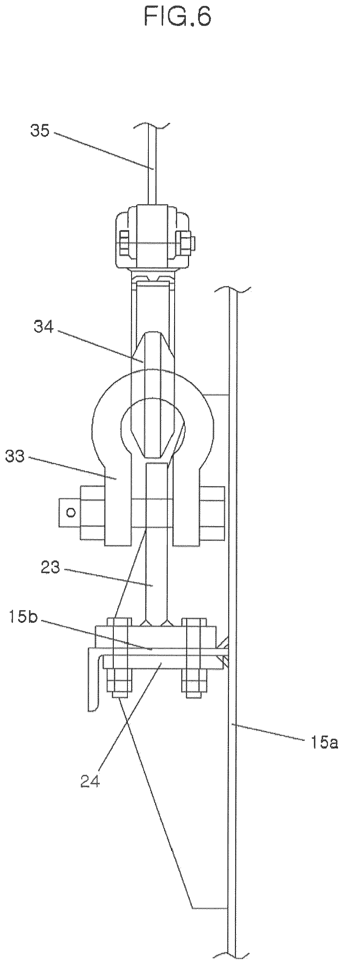

FIG. 6 is a side view of a portion where the stiffener lug and the stiffener plate applied to the liquefied gas tank including hoistable the inner tub according to the present disclosure are installed.

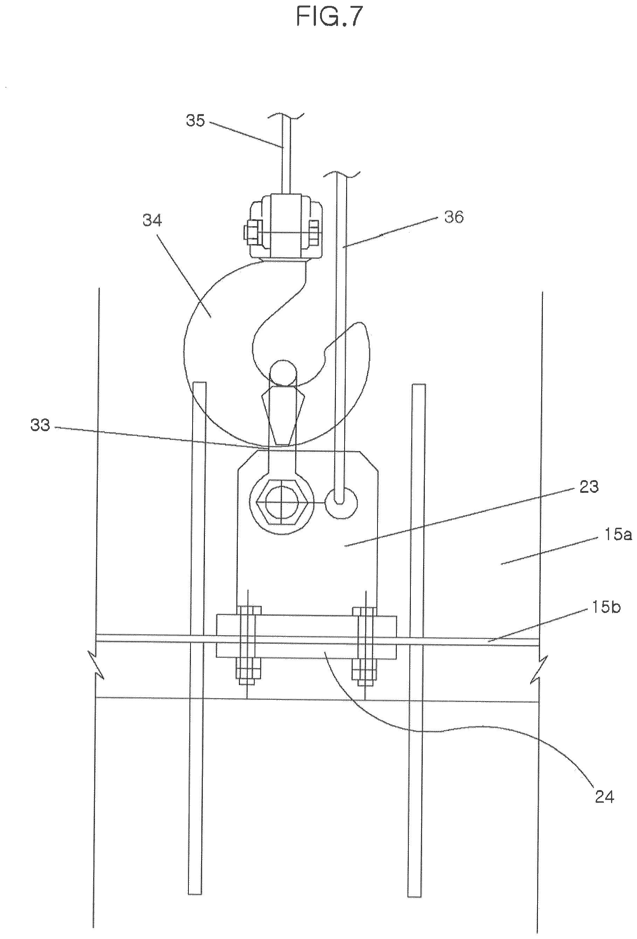

FIG. 7 is a front view of a portion where the stiffener lug and the stiffener plate applied to the liquefied gas tank including hoistable the inner tub according to the present disclosure are installed.

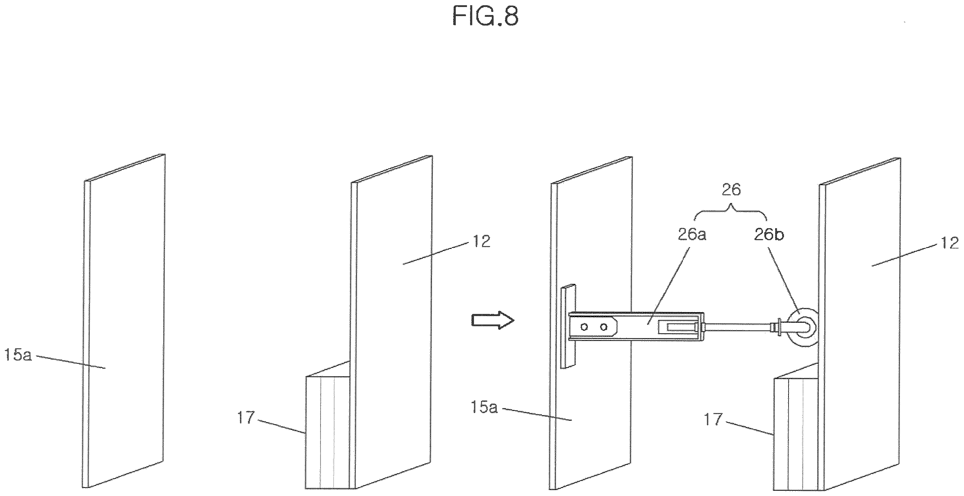

FIG. 8 is a perspective view illustrating states before and after a carrying support applied to the liquefied gas tank including hoistable the inner tub according to the present disclosure is installed.

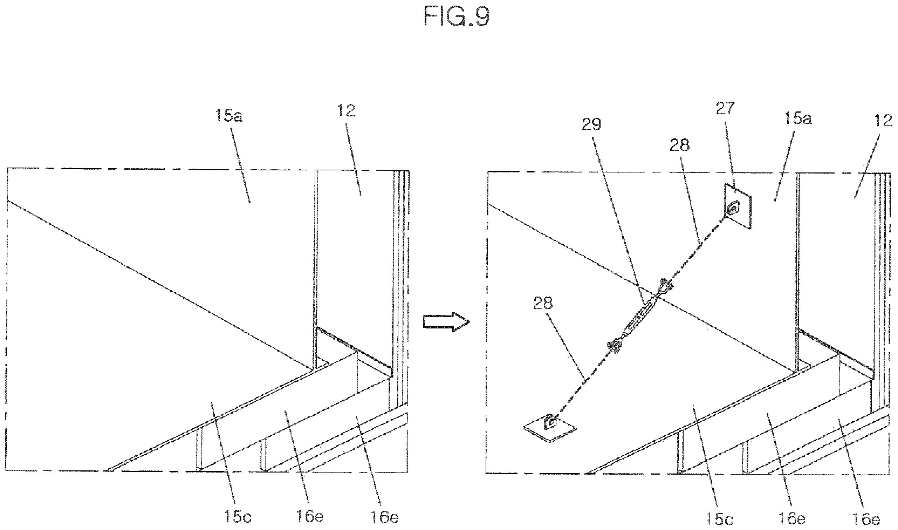

FIG. 9 is a perspective view illustrating states before and after a side plate of the inner tub and a bottom periphery plate are connected with a wire in the liquefied gas tank including hoistable the inner tub according to the present disclosure.

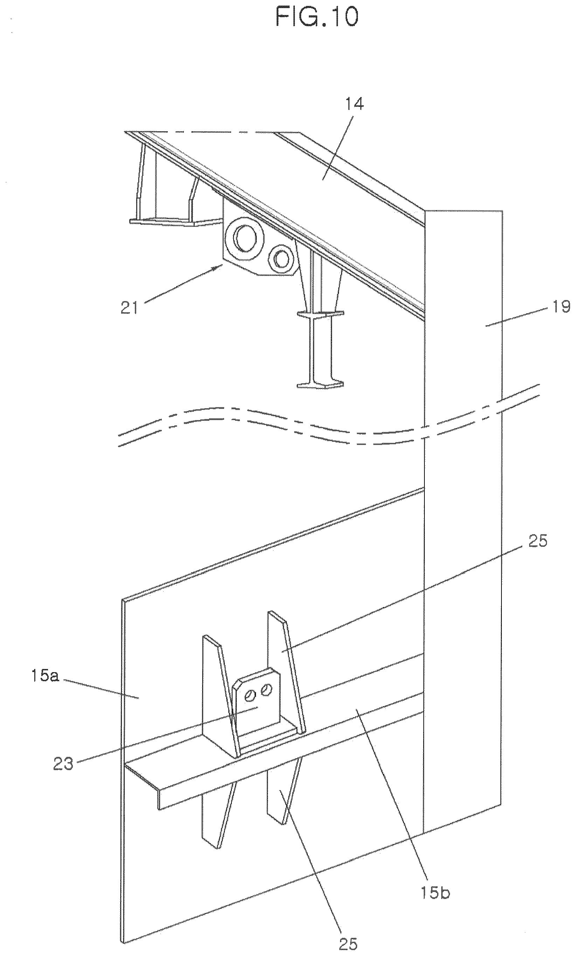

FIG. 10 is a perspective view illustrating a state in which the rafter lug, the stiffener lug, and the stiffener plate are installed on the inner tub to perform a method of hoisting the inner tub of the liquefied gas tank according to the present disclosure.
FIG. 11 is a perspective view illustrating a state in which a main rope and a sub rope are installed on the rafter lug, the stiffener lug, and the stiffener plate installed on the inner tub to perform the method of hoisting the inner tub of the liquefied gas tank according to the present disclosure.
FIG. 12 is a side view illustrating a state in which an anchor is installed between a roof and a rafter to perform the method of hoisting the inner tub of the liquefied gas tank according to the present disclosure.
FIG. 13 is a side view illustrating a state in which an operator adjusts a chain block in accordance with the method of hoisting the inner tub of the liquefied gas tank according to the present disclosure.
FIG. 14 is a perspective view illustrating a state in which the inner tub is hoisted in accordance with the method of hoisting the inner tub of the liquefied gas tank according to the present disclosure.
FIG. 15 is a side view illustrating a state in which the inner tub hoisted in accordance with the method of hoisting the inner tub of the liquefied gas tank according to the present disclosure is supported by a safety support.
FIG. 16 is a flowchart illustrating the method of hoisting the inner tub of the liquefied gas tank according to the present disclosure.

### [Description of Main Reference Numerals of Drawings]

10: Tank
11: Outer wall
12: Wall body sealing plate
13: Roof
14: Rafter
15: Inner shell
15a: Side plate
15b: Reinforcing plate
15c: Bottom periphery plate
16a: Bottom sealing plate
16b: Rear sealing plate
16c: Bottom blocking plate
16d: Glass block
16e: Concrete block
17: Corner protection
18a: Deck
18b: Flap
18c: Thermal insulator
19: Support
21: Rafter lug
21a: Lug pad
21b: Lug plate
21c: First reinforcing ring
21d: Second reinforcing ring
22: Anchor
23: Stiffener lug
23a: Through-hole
24: Stiffener pad
25: Stiffener plate
26: Carrying support
26a: Body
26b: Caster
27: Support lug
28: Wire
29: Turnbuckle
31: Chain block
32: Turnbuckle
33: Shackle
34: Hook
35: Main rope
36: Sub rope
37: Safety support
37a: H-beam
S110: Structure installing step
S111: Rafter lug installing step
S112: Stiffener lug installing step
S113 : Carrying support installing step
S114: Wire installing step
S120: Lifting preparing step
S130: Inner shell separating step
S140: Inner shell hoisting step
S150: Inner shell supporting step

### [Best Mode]

Hereinafter, a liquefied gas tank including hoistable an inner tub, and method for hoisting an inner tub in liquefied gas tank according to the present disclosure will be described in detail with reference to the accompanying drawings.

A liquefied gas tank 10 for storing liquefied gas such as LNG has a structure illustrated in FIG. 1.

The liquefied gas tank 10 includes an outer wall 11 made of concrete, and an inner tub 15 disposed inside the outer wall 11 and configured to accommodate liquid-phase LNG. The liquefied gas tank 10 is structured such that an upper side thereof is closed by a roof 13 with a dome shape. A wall body sealing plate 12 for preventing a leakage of gas is disposed on an inner surface of the outer wall 11, and a rafter 14 for defining a framework of the roof 13 is disposed on a bottom surface of the roof 13. The rafter 14 has a cross-section identical to a cross-section of an H-beam. The rafter 14 is provided in plural, and the plurality of rafters 14 is disposed in a radial direction and a peripheral direction of the tank 10 and supports the roof 13 of the tank 10.

An upper side of the inner tub 15 is closed by a deck 18a. A thermal insulator 18c is disposed on an upper portion of the deck 18a, and a flap 18b is installed at the periphery of the deck 18a and hingedly connected to the deck 18a for inspection.

The inner tub 15 includes a side plate 15a and a bottom periphery plate 15c. The side plate 15a defines the periphery of the inner tub 15, and the bottom periphery plate 15c is a peripheral portion of the bottom of the inner tub 15. A bottom sealing plate 16a is provided on the bottom of the inner tub 15 and disposed inside the bottom periphery plate 15c, and a rear sealing plate 16b and a bottom blocking plate 16c are disposed below the bottom sealing plate 16a. A base such as a pile is installed below the bottom blocking plate 16c.

Glass blocks 16d for thermal insulation are installed between the bottom sealing plate 16a and the rear sealing plate 16b and between the rear sealing plate 16b and the bottom blocking plate 16c, and concrete blocks 16e for supporting a load are installed outside the glass block 16d.

The inner tub, i.e., the side plate 15a, the bottom periphery plate 15c, and the bottom sealing plate 16a, which are in direct contact with the LNG, may be made of a metal plate, e.g., a 9% nickel steel sheet excellent in low-temperature properties. To support the load of the LNG, the side plate 15a and the bottom periphery plate 15c each are a thick plate made of a 9% nickel steel sheet and having a thickness of 25 mm for example. The bottom sealing plate 16a may have a smaller thickness than the side plate 15a or the bottom periphery plate 15c. The bottom periphery plate 15c and the bottom sealing plate 16a are joined by welding, such that the lower portion of the inner tub 15 has a sealed structure.

It is necessary to check whether the inner tub 15 has a crack when the inner tub 15 reaches a predetermined time period such as a durability limit or when whether the inner tub 15 has a crack needs to be checked.

To this end, in the present disclosure, the inner tub 15 is hoisted, i.e., moved upward to a predetermined height and then inspected. The crack inspection is easily performed on the side plate 15a of the inner tub 15, but it is not easy to inspect the bottom periphery plate 15c, in particular, the bottom surface of the bottom periphery plate 15c. Therefore, it is possible to easily inspect the part, which is difficult to inspect with the naked eye, by hoisting the inner tub 15.

A means for hoisting the inner tub 15 is connected to the tank 10 before the inner tub 15 is hoisted, or a structure for reinforcing rigidity is installed to prevent deformation of the inner tub 15 and the tank 10 while the inner tub 15 is hoisted or in the state in which the inner tub 15 is hoisted.

A rafter lug 21 is installed on the rafter 14 to hoist the inner tub 15. A hoisting means for hoisting the inner tub 15 is installed on the rafter lug 21, and a supporting means for preventing the sag of the inner tub 15 at the time of hoisting the inner tub 15 is installed on the rafter lug 21. The rafter lug 21 is installed for each of the rafters 14 installed in the radial direction. Because the inner tub 15 is a weight member, the inner tub 15 may be hoisted by the hoisting means installed for each of the plurality of points, i.e., for each of the rafters 14.

The rafter lug 21 includes a lug pad 21a joined to the bottom surface of the rafter 14 by welding, and a lug plate 21b extending downward from the lug pad 21a. The lug plate 21b is provided to be perpendicular to a bottom surface of the lug pad 21a. However, the lug plate 21b is inclined at a predetermined angle α with respect to a longitudinal direction of the rafter 14. That is, the lug plate 21b is inclined with respect to the rafter 14, and this is to prevent the hoisting means and the supporting means from overlapping each other at the time of installing the hoisting means and the supporting means. The inclination angle α may be about 10 degrees.

The lug plate 21b has through-holes in which the hoisting means and the supporting means are caught and installed, respectively. Reinforcing rings 21c and 21d are respectively formed at the peripheries of the through-holes to reinforce the strength. The hoisting means and the supporting means may be installed in the through-holes, but because the inner tub 15 is a weight member, the reinforcing rings 21c and 21d, which are thicker than the lug plate 21b, are formed at the peripheries of the through-holes to increase supporting forces.

Among the through-holes formed in the lug plate 21b, the through-hole in which the hoisting means is installed may have a larger diameter than the through-hole in which the supporting means is installed. Therefore, the reinforcing rings 21c and 21d respectively formed around the through-holes have different diameters. That is, a diameter of the first reinforcing ring 21c for reinforcing the through-hole in which the hoisting means is installed is larger than a diameter of the second reinforcing ring 21d for reinforcing the through-hole in which the supporting means is installed.

In this case, the hoisting means may be a chain block 31, and the supporting means may be a turnbuckle 32. The chain block 31 is a device for winding or unwinding a chain or a rope using a gear, a pulley, and the like. The chain blocks 31 are installed along an upper periphery of the inner tub 15 by the rafter lugs 21 for the respective rafters 14, and the chain blocks 31 and the inner tub 15 are connected with main ropes 35, such that the heavy inner tub 15 may be hoisted. The inner tub 15 may be sagged by the weight of the inner tub 15 while the inner tub 15 is hoisted by the chain block 31. Therefore, the inner tub 15 is connected to a lower portion of the turnbuckle 32 with a sub rope 36 to substantially prevent the inner tub 15 from sagging even though the chain block 31 or the main rope 35 sags.

A stiffener lug 23 is installed on the side plate 15a of the inner tub 15 to enable the hoisting means and the supporting means installed on the rafter lug 21 to hoist the inner tub 15. The stiffener lug 23 may be installed directly on the side plate 15a. However, the reinforcing plate 15b is installed on the side plate 15a to reinforce the strength of the side plate 15a in the state in which the inner tub 15 accommodates the LNG. The reinforcing plate 15b is provided in the form of a band along the periphery of the inner tub 15, and an inner periphery of the reinforcing plate 15b is joined to the side plate 15a, thereby supporting the load applied to in a peripheral direction of the inner tub 15 at the time of storing the LNG.

The stiffener lug 23 is installed on the reinforcing plate 15b instead of being installed directly on the side plate 15a, such that the side plate 15a disperses the applied load.

A lower end of the stiffener lug 23 is provided in the form of a flange, and the remaining portion of the stiffener lug 23 is perpendicular to the lower end of the stiffener lug 23. The stiffener lug 23 is coupled directly to the reinforcing plate 15b or installed on the reinforcing plate 15b by fastening the stiffener lug 23 and the stiffener pad 24 by a bolt and a nut.

The stiffener lug 23 has through-holes 23a equal in number to the through-holes formed in the rafter lug 21. The through-holes of the stiffener lug 23 are provided to connect the main rope 35 and the sub rope 36 connected to the hoisting means and the supporting means.

Meanwhile, the inner tub 15 may be deformed by the weight of the inner tub 15 at the time of hoisting the inner tub 15 even though the stiffener lug 23 is installed. Therefore, the side plate 15a and the reinforcing plate 15b of the inner tub 15 are connected by using stiffener plates 25 each having one surface joined to the side plate 15a and the other surface joined to the reinforcing plate 15b. The stiffener plates 25 may be respectively installed at left and right sides of the stiffener lug 23 and installed below the stiffener lug 23. That is, a total of four stiffener plates 25 may be installed at the left and right sides of one stiffener lug 23 and installed below the stiffener lug 23. The stiffener plate 25 may be joined to the side plate 15a and the reinforcing plate 15b of the inner tub 15 by welding.

To prevent the sway of the inner tub 15 hoisted from the bottom at the time of hoisting the inner tub 15, a carrying support 26 is disposed between an outer surface of the side plate 15a and an inner surface of the outer wall 11.

The carrying support 26 includes a body 26a fixed to the outer surface of the side plate 15a, and a caster 26b installed on the body 26a. The body 26a and the caster 26b of the carrying support 26 are screw-coupled to each other, such that a length of the carrying support 26 may be adjusted in accordance with an interval between the side plate 15a and the outer wall. Therefore, the caster 26b is installed to be in contact with the outer wall 11, thereby preventing the sway of the inner tub 15 when the inner tub 15 moves upward or downward.

Meanwhile, when the carrying support 26 is installed on the inner tub 15, the caster 26b is positioned above a corner protection 17. The corner protection 17 is installed on a portion of the outer wall 11 which is in contact with the bottom and is thicker than other portions. A 9% nickel steel sheet is installed on the corner protection 17 to prevent the inner tub 15 from coming into contact with the outer wall 11 even though the LNG leaks from the inner tub 15. Since the portion where the corner protection 17 is installed has a large thickness, the carrying support 26 is installed to be higher than the corner protection 17, thereby preventing the sway of the inner tub 15 when the inner tub 15 moves upward or downward.

Since the peripheral portion of the bottom of the inner tub 15, i.e., the bottom periphery plate 15c is provided in the form of a thick plate, the bottom periphery plate 15c may be sagged by the weight of the bottom periphery plate 15c at the time of hoisting the inner tub 15. To prevent this problem, support lugs 27 are respectively installed on the side plate 15a and the bottom periphery plate 15c and connected with a wire 28. To adjust tension of the wire 28, a turnbuckle 29 may be installed on a middle portion of the wire 28.

The above-mentioned structures, i.e., the rafter lug 21, the stiffener lug 23, the stiffener plate 25, the carrying support 26, and the support lug 27 may be installed on the rafter 14 or the inner tub 15 at the time of initially installing the tank 10 but may be additionally installed at the time of inspecting the tank 10.

Non-described reference numeral 19 indicates a support installed on the outer wall and configured to support the rafter 14.

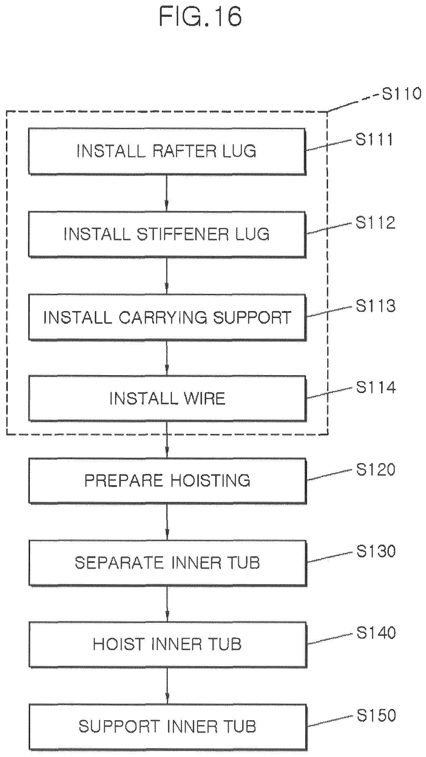

FIG. 16 is a flowchart illustrating a method for hoisting an inner tub in a liquefied gas tank according to the present disclosure.

In a case in which the inner tub 15 is hoisted to inspect the liquefied gas tank 10, the structures required to hoist the inner tub 15 are installed first in addition to the inner tub 15 and the rafter 14 (S110). That is, in the structure installing step S110, the structures required to hoist the inner tub 15 are additionally installed on the tank 10 in the related art.

The structure installing step S110 includes a rafter lug installing step S111 of installing the rafter lug 21 on the bottom surface of the rafter 14, and a stiffener lug installing step S112 of installing the stiffener lug 23, which is connected to the rafter lug 21 with the ropes 35 and 36, at the periphery of the side plate 15a of the inner tub 15. In the rafter lug installing step S111, the rafter lugs 21 are joined to the bottom surfaces of the rafters 14 for the respective rafters 14 by welding. The stiffener lugs 23 may be equal in number to the rafter lugs 21. Therefore, the plurality of rafter lugs 21 and the plurality of stiffener lugs 23 are disposed in the tank 10 and installed at intervals in the peripheral direction. In addition, in the stiffener lug installing step S112, the stiffener plates 25 may be installed at intervals from the stiffener lug 23 and disposed around the stiffener lug 23 before the stiffener lug 23 is installed on the reinforcing plate 15b, and the stiffener plate 25 has one surface joined to the side plate 15a and the other surface joined to the reinforcing plate 15b. The stiffener plates 25 are installed at the two opposite left and right sides of the stiffener lug 23 and support the load of the inner tub 15 at the time of hoisting the inner tub 15. The stiffener lug installing step S112 may be performed first, and then the rafter lug installing step S111 and the stiffener lug installing step S112 may be performed.

In addition, the method may further include a carrying support installing step S113 of installing the carrying support 26 between the side plate 15a of the inner tub 15 and the inner surface of the outer wall 11 to prevent the sway of the inner tub 15 at the time of hoisting the inner tub 15, and a wire installing step S114 of installing the support lugs 27 on the side plate 15a and the bottom periphery plate 15c in the peripheral direction of the inner tub 15, fixing the two opposite ends of the wire 28 to the support lug 27, and connecting the side plate 15a and the bottom periphery plate 15c to prevent the bottom periphery plate 15c of the inner tub 15 from sagging.

When the structures are completely installed on the rafter 14 and the inner tub 15 as described above, a hoisting preparing step S120 of preparing the hoisting of the inner tub 15 is performed. In the hoisting preparing step S120, the hoisting means is installed on the rafter 14, and the hoisting means and the inner tub 15 are connected with the main rope 35.

On the rafter 14, the hoisting means, i.e., the chain block 31 for hoisting the inner tub 15 is installed in the through-hole around which the first reinforcing ring 21c is formed, and the chain block 31 and the stiffener lug 23 are connected with the main rope 35. A shackle 33 is installed in the through-hole 23a of the stiffener lug 23, a hook 34 is installed at a lower end of the main rope 35, and the hook 34 engages with the shackle 33, such that the rafter lug 21 and the stiffener lug 23 may be connected.

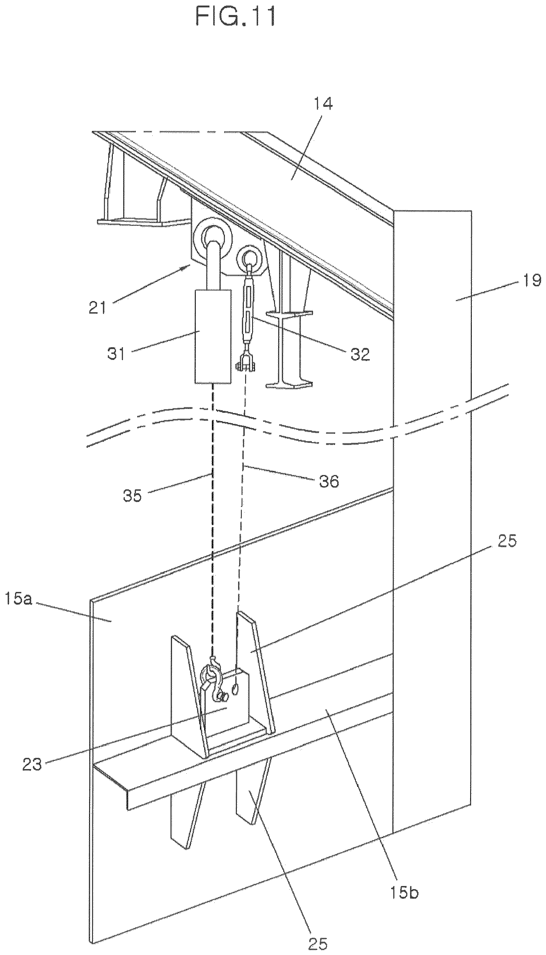

Meanwhile, as illustrated in FIG. 11, the chain block 31 may sag while the inner tub 15 is hoisted. To prevent this problem, in the hoisting preparing step S120, the supporting means (e.g., the turnbuckle) is installed on the rafter 14, and the supporting means and the inner tub 15 are also connected with the sub rope 36.

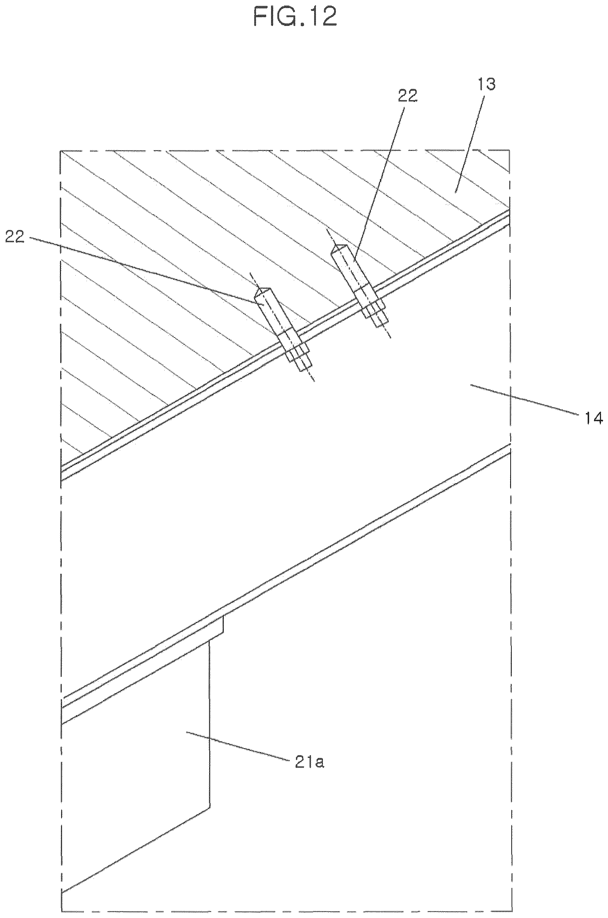

Further, in the hoisting preparing step S120, the rafter 14 and the roof 13 are fixed by an anchor 22. Since the rafter 14 and the roof 13 are fixed, the supporting force of the rafter 14 is increased (see FIG. 12).

In an inner tub separating step S130, the bottom periphery plate 15c and the bottom sealing plate 16a are separated. Because the bottom periphery plate 15c and the bottom sealing plate 16a are kept joined to each other while accommodating the LNG, the joined portions between the bottom periphery plate 15c and the bottom sealing plate 16a are separated from each other by welding to hoist the inner tub 15.

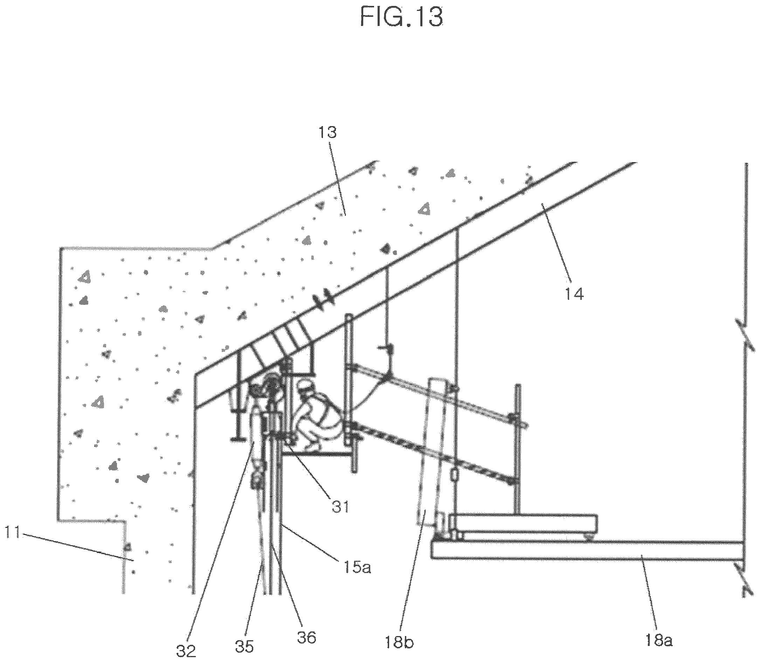

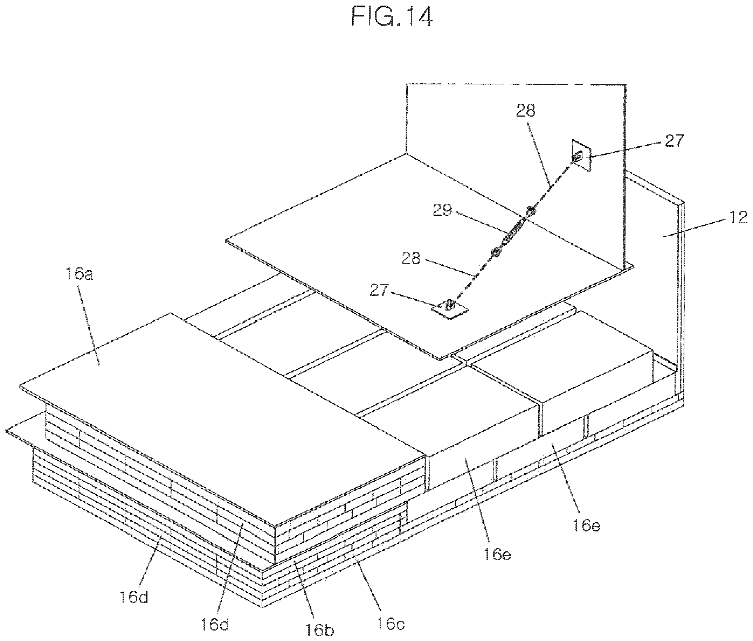

In an inner tub hoisting step S140, the operator manipulates the hoisting means and hoists the inner tub 15 (see FIG. 13). Several operators hoist the inner tub 15 to a predetermined distance by manipulating the hoisting means installed for the respective portions where the rafter lugs 21 are installed through the deck 18a or installed on the respective rafters 14 disposed at predetermined intervals in the peripheral direction. Therefore, the respective operators move to the other adjacent rafters 14 and hoist the inner tub 15 to a predetermined distance. The operators may be disposed for the respective rafters 14. However, when the operators are disposed at predetermined intervals, the respective operators move the inner tub 15 slightly upward while sequentially moving the hoisting means. This process is repeated to hoist the inner tub 15 to a predetermined height (see FIG. 14).

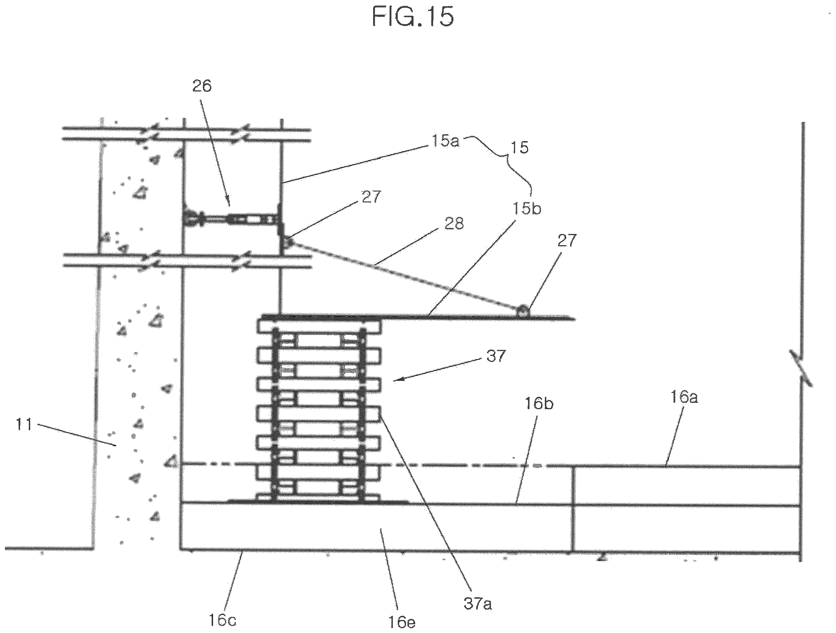

The interior of the tank 10 or the bottom surface of the inner tub 15 may be immediately inspected in the state in which the inner tub 15 is completely hoisted. However, because the inner tub 15 may fall unintentionally, an inner tub supporting step S150 of installing a safety support 37 along the periphery of the bottom of the inner tub 15. The safety support 37 has a structure made by stacking H-beams 37A to have a predetermined height. An upper end of the safety support 37 is in contact with the bottom of the inner tub 15 to prevent the inner tub 15 from falling (see FIG. 15).

In the state in which the inner tub 15 is completely hoisted and the safety is ensured as described above, whether the part, which is not easy to check with the naked eye, has a crack is inspected.

## Claims

1. A liquefied gas tank including a hoistable an inner tub, the liquefied gas tank (10) comprising:
an outer wall (11);
an inner tub (15) disposed inside the outer wall (11) and configured to accommodate liquefied gas; and
rafters (14) disposed on a bottom surface of a roof (13) and configured to define a framework,
wherein rafter lugs (21) for supporting the inner tub (15) at the time of hoisting the inner tub (15) are installed for the respective rafters (14) formed in a circumferential direction of the roof (13) and disposed at intervals in a peripheral direction of the tank (10),
wherein stiffener lugs (23), which are connected to the rafter lugs (21) with main ropes (35), are disposed at a periphery of a side plate (15a) of the inner tub (15) and installed at intervals in a peripheral direction of the inner tub (15), and
wherein a hoisting means is installed on the rafter lug (21), the hoisting means and the stiffener lug (23) are connected with the main rope (35), and then the hoisting means is manipulated to hoist the inner tub (15),
wherein the rafter lug (21) comprises:
a lug pad (21a) joined to the rafter (14); and
a lug plate (21b) formed to be perpendicular to a bottom surface of the lug pad (21a),
wherein the lug plate (21b) is formed on the lug pad (21a) to be inclined at a predetermined angle with respect to the rafter (14) formed in a radial direction of the tank (10),
**characterized in that** a band-shaped reinforcing plate (15b) for enhancing stiffness of the side plate (15a) is provided on the side plate (15a) and disposed along a periphery of the inner tub (15),
wherein at both sides of the stiffener lug (23) in the upper and lower portions of the reinforcing plate (15), stiffener plates (25) are respectively installed to prevent deformation of the inner tub (15), and
wherein support lugs (27) are respectively installed on the side plate (15a) and the bottom periphery plate (15c) of the inner tub (15) to prevent sagging of the bottom periphery plate (15c), the support lugs (27) are connected by wires (28) each other.

2. The liquefied gas tank of claim 1,
wherein the lug plate (21b) has one or more reinforcing rings (21c) and (21d) that catch the hoisting means.

3. The liquefied gas tank of claim 2, wherein the stiffener lug (23) is fixed to the reinforcing plate (15b).

4. The liquefied gas tank of claim 3, wherein the stiffener lug (23) has through-holes (23a) connected to the reinforcing rings (21c) and (21d) of the rafter lug (21) with the ropes (35) and (36).

5. The liquefied gas tank of claim 4, wherein the hoisting means is installed on the first reinforcing ring (21c) of the rafter lug (21), the hoisting means and one of the through-holes (23a) formed in the stiffener lug (23) are connected with the main rope (35), a supporting means is installed on the second reinforcing ring (21d) of the rafter lug (21), and the supporting means and the other through-hole (23a) formed in the stiffener lug (23) are connected with a sub rope (36).

6. The liquefied gas tank of claim 3, wherein the stiffener lug (23) is coupled, by bolting, to a stiffener pad (24) positioned on a bottom surface of the reinforcing plate (15c).

7. The liquefied gas tank of claim 3,
wherein the stiffener plate (25) has one surface joined to the side plate (15a) at positions adjacent to a portion where the stiffener lug (23) is installed, and the other surface joined to the reinforcing plate (15b).

8. The liquefied gas tank of claim 1, comprising:
carrying supports (26) provided at intervals along the periphery of the side plate (15a) and configured to prevent the inner tub (15) from swaying when the inner tub (15) is hoisted.

9. The liquefied gas tank of claim 1, wherein a turnbuckle is installed in the middle of the wire (28) to adjust the tension of the wire (28) connected between the support lugs (27) installed on the side plate (15a) and on the bottom periphery plate (15c).

10. The liquefied gas tank of claim 1, wherein the rafter (14) is fixed to the roof (13) by an anchor (22).

## Patentansprüche

1. Ein Flüssiggastank, der eine hochziehbare Innenwanne aufweist, wobei der Flüssiggastank (10) folgende Merkmale aufweist:
eine Außenwand (11);
eine Innenwanne (15), die in der Außenwand (11) angeordnet ist und dazu konfiguriert ist, Flüssiggas aufzunehmen; und
Sparren (14), die an einer unteren Oberfläche eines Dachs (13) angeordnet sind und dazu konfiguriert sind, ein Rahmentragwerk zu definieren,
wobei Sparrenansätze (21) zum Tragen der Innenwanne (15) zum Zeitpunkt des Hochziehens der Innenwanne (15) für die jeweiligen Sparren (14) eingebaut sind, die in einer Umfangsrichtung des Dachs (13) gebildet sind und in Abständen in einer Umfangsrichtung des Tanks (10) angeordnet sind,
wobei Versteifungsansätze (23), die mit Förderseilen (35) mit den Sparrenansätzen (21) verbunden sind, an einem Umfang einer Seitenplatte (15a) der Innenwanne (15) angeordnet sind und in Abständen in einer Umfangsrichtung der Innenwanne (15) eingebaut sind, und
wobei eine Hochzieheinrichtung an den Sparrenansätzen (21) eingebaut ist, die Hochzieheinrichtung und der Versteifungsansatz (23) mit dem Förderseil (35) verbunden sind, und dann die Hochzieheinrichtung betätigt wird, um die Innenwanne (15) hochzuziehen,
wobei der Sparrenansatz (21) folgende Merkmale aufweist:
eine Ansatzanschlussfläche (21a), die mit dem Sparren (14) verbunden ist; und
eine Ansatzplatte (21b), die gebildet ist, um zu einer Unteroberfläche der Ansatzanschlussfläche (21a) senkrecht zu sein,
wobei die Ansatzplatte (21b) an der Ansatzanschlussfläche (21a) gebildet ist, um mit einem vorbestimmten Winkel in Bezug auf den Sparren (14) geneigt zu sein, der in einer Radialrichtung des Tanks (10) gebildet ist,
**dadurch gekennzeichnet, dass**
eine bandförmige Verstärkungsplatte (15b) zum Verstärken der Steifigkeit der Seitenplatte (15a), die an der Seitenplatte (15a) vorgesehen ist und entlang einem Umfang der Innenwanne (15) angeordnet ist,
wobei an beiden Seiten des Versteifungsansatzes (23) in dem oberen und unteren Abschnitt der Verstärkungsplatte (15) jeweils Verstärkungsplatten (25) eingebaut sind, um eine Verformung der Innenwanne (15) zu verhindern, und
wobei Trageansätze (27) jeweils an der Seitenplatte (15a) und der unteren Umfangsplatte (15c) der Innenwanne (15) eingebaut sind, um ein Absenken der unteren Umfangsplatte (15c) zu verhindern, wobei die Trageansätze (27) durch Drähte (28) miteinander verbunden sind.

2. Der Flüssiggastank gemäß Anspruch 1,
bei dem die Ansatzplatte (21b) einen oder mehrere Verstärkungsringe (21c) und (21d) aufweist, die die Hochzieheinrichtung ergreifen.

3. Der Flüssiggastank gemäß Anspruch 3, bei dem der Verstärkungsansatz (23) an der Verstärkungsplatte (15b) fixiert ist.

4. Der Flüssiggastank gemäß Anspruch 3, bei dem der Verstärkungsansatz (23) Durchgangslöcher (23a) aufweist, die mit den Seiten (35) und (36) mit den Verstärkungsringen (21c) und (21d) des Sparrenansatzes (21) verbunden sind.

5. Der Flüssiggastank gemäß Anspruch 4, bei dem die Hochzieheinrichtung an dem ersten Verstärkungsring (21c) des Sparrenansatzes (21) eingebaut ist, die Hochzieheinrichtung und eines der Durchgangslöcher (23a), das in dem Versteifungsansatz (23) gebildet ist, mit dem Förderseil (35) verbunden sind, eine Trageeinrichtung an dem zweiten Verstärkungsring (21d) des Sparrenansatzes (21) eingebaut ist, und die Trageeinrichtung und das andere Durchgangsloch (23a), das in dem Verstärkungsansatz (23) gebildet ist, mit einem Unterseil (36) verbunden sind.

6. Der Flüssiggastank gemäß Anspruch 3, bei dem der Versteifungsansatz (23) durch Verschrauben mit einer Versteifungsanschlussfläche (24) gekoppelt ist, die an einer Unteroberfläche der Verstärkungsplatte (15c) positioniert ist.

7. Der Flüssiggastank gemäß Anspruch 3,
bei dem eine Oberfläche der Versteifungsplatte (25) mit der Seitenplatte (15a) verbunden ist, an Positionen benachbart zu einem Abschnitt, wo der Versteifungsansatz (23) eingebaut ist, und die andere Oberfläche mit der Verstärkungsplatte (15b) verbunden ist.

8. Der Flüssiggastank gemäß Anspruch 1, der folgende Merkmale aufweist:
Tragestützen (25), die in Abständen entlang dem Umfang der Seitenplatte (15a) vorgesehen sind und dazu konfiguriert sind, zu verhindern, dass die Innenwanne (15) schwingt, wenn die Innenwanne (15) hochgezogen wird,

9. Der Flüssiggastank gemäß Anspruch 1, bei dem in der Mitte des Drahts (28) ein Spanner eingebaut ist, um die Spannung des Drahts (28) einzustellen, der zwischen den Trageansätzen (27) verbunden ist, die an der Seitenplatte (15a) und an der unteren Umfangsplatte (15c) eingebaut sind.

10. Der Flüssiggastank gemäß Anspruch 1, bei dem der Sparren (14) durch einen Anker (22) an dem Dach (13) fixiert ist.

## Revendications

1. Réservoir de gaz liquéfié comprenant une cuve intérieure pouvant être levée, le réservoir de gaz liquéfié (10) comprenant:
une paroi extérieure (11);
une cuve intérieure (15) disposée à l'intérieur de la paroi extérieure (11) et configurée pour contenir du gaz liquéfié; et
des poutres (14) disposées sur une surface inférieure d'un toit (13) et configurées pour définir une charpente,
dans lequel des pattes de poutre (21) destinées à supporter la cuve intérieure (15) au moment du levage de la cuve intérieure (15) sont installées pour les poutres respectives (14) formées dans une direction circonférentielle du toit (13) et disposées à des intervalles dans une direction périphérique du réservoir (10),
dans lequel des pattes de raidissement (23), qui sont connectées aux pattes de poutre (21) par des câbles principaux (35), sont disposées à la périphérie d'une plaque latérale (15a) de la cuve intérieure (15) et installées à des intervalles dans un direction périphérique de la cuve intérieure (15), et
dans lequel un moyen de levage est installé sur la patte de poutre (21), le moyen de levage et les pattes de raidissement (23) sont connectés au câble principal (35), puis le moyen de levage est manipulé pour lever la cuve intérieure (15),
dans lequel la patte de poutre (21) comprend:
un coussinet à oreille (21a) joint à la poutre (14); et
une plaque à oreille (21b) formée de manière à être perpendiculaire à une surface inférieure du coussinet à oreille (21a),
dans lequel la plaque à oreille (21b) est formée sur le coussin à oreille (21a) de manière à être inclinée selon un angle prédéterminé par rapport à la poutre (14) formée dans une direction radiale du réservoir (10),
**caractérisé par le fait qu'**une plaque de renforcement en forme de bande (15b) destinée à améliorer la rigidité de la plaque latérale (15a) est prévue sur la plaque latérale (15a) et disposée le long d'une périphérie de la cuve intérieure (15),
dans lequel, des deux côtés de la patte de raidissement (23) dans les parties supérieure et inférieure de la plaque de renforcement (15), des plaques de raidissement (25) sont respectivement installées pour empêcher une déformation de la cuve intérieure (15), et
dans lequel des pattes de support (27) sont respectivement installées sur la plaque latérale (15a) et sur la plaque périphérique inférieure (15c) de la cuve intérieure (15) pour empêcher l'affaissement de la plaque périphérique inférieure (15c), les pattes de support (27) sont connectées par des fils (28) l'une à l'autre.

2. Réservoir de gaz liquéfié selon la revendication 1,
dans lequel la plaque à oreille (21b) présente un ou plusieurs anneaux de renforcement (21c) et (21d) qui attrapent le moyen de levage.

3. Réservoir de gaz liquéfié selon la revendication 2, dans lequel la patte de raidissement (23) est fixée à la plaque de renforcement (15b).

4. Réservoir de gaz liquéfié selon la revendication 3, dans lequel la patte de raidissement (23) présente des trous traversants (23a) connectés aux anneaux de renforcement (21c) et (21d) de la patte de poutre (21) par les câbles (35) et (36).

5. Réservoir de gaz liquéfié selon la revendication 4, dans lequel le moyen de levage est installé sur le premier anneau de renforcement (21c) de la patte de poutre (21), le moyen de levage et l'un des trous traversants (23a) formés dans la patte de raidissement (23) sont connectés au câble principal (35), un moyen de support est installé sur le deuxième anneau de renforcement (21d) de la patte de poutre (21), et le moyen de support et l'autre trou traversant (23a) formé dans la patte de raidissement (23) sont connectés à un sous-câble (36).

6. Réservoir de gaz liquéfié selon la revendication 3, dans lequel la patte de raidissement (23) est couplée, par boulonnage, à une patte de raidissement (24) positionnée sur une surface inférieure de la plaque de renforcement (15c).

7. Réservoir de gaz liquéfié selon la revendication 3,
dans lequel la plaque de renforcement (25) présente une surface jointe à la plaque latérale (15a) au niveau de positions adjacentes à une partie où est installée la patte de raidissement (23), et l'autre surface jointe à la plaque de renforcement (15b).

8. Réservoir de gaz liquéfié selon la revendication 1, comprenant:
des supports porteurs (26) disposés à des intervalles le long de la périphérie de la plaque latérale (15a) et configurés pour empêcher que la cuve intérieure (15) ne balance lorsque la cuve intérieure (15) est levée.

9. Réservoir de gaz liquéfié selon la revendication 1, dans lequel un tendeur est installé au milieu du fil (28) pour régler la tension du fil (28) connecté entre les pattes de support (27) installée sur la plaque latérale (15a) et sur la plaque périphérique inférieure (15c).

10. Réservoir de gaz liquéfié selon la revendication 1, dans lequel la poutre (14) est fixée au toit (13) par un ancrage (22).
